Europäisches Patentamt
European Patent Office
Office européen des brevets

(19) (11) Veröffentlichungsnummer: **0 043 488 A1**

(12) # EUROPÄISCHE PATENTANMELDUNG

(21) Anmeldenummer: **81104785.1**

(22) Anmeldetag: **22.06.81**

(51) Int. Cl.³: **C 07 C 103/76**, C 07 C 103/78, A 01 N 37/30

(30) Priorität: **03.07.80 DE 3025220**

(43) Veröffentlichungstag der Anmeldung: **13.01.82 Patentblatt 82/2**

(84) Benannte Vertragsstaaten: **BE CH DE FR GB IT LI NL**


(71) Anmelder: **BAYER AG, Zentralbereich Patente, Marken und Lizenzen, D-5090 Leverkusen 1, Bayerwerk (DE)**

(72) Erfinder: **Kühle, Engelbert, Dr., Von-Bodelschwingh-Strasse 42, D-5060 Bergisch-Gladbach 2 (DE)**
Erfinder: **Kraus, Peter, Dr. Bayer Research Station, for Crop Protection P.O. Box 2062, Cairo (EG)**
Erfinder: **Kauke, Erich, Dr., Eichendorffweg 8, D-5068 Odenthal (DE)**


(54) **Tetrachlorphthalamidsäure-Derivate, Verfahren zu ihrer Herstellung und ihre bakterizide Verwendung.**


(57) Die Erfindung betrifft neue Tetrachlorphthalamid-Derivate der allgemeinen Formel

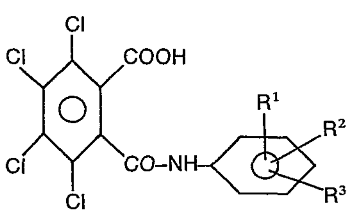

(I)

wobei

$R^1$ für die Difluormethyl-, Difluormethoxi- oder Difluormethylmercapto-Gruppe steht,

$R^2$ für Wasserstoff, Chlor, Fluor, eine Methyl- oder eine Methoxi-Gruppe steht, und

$R^3$ für Wasserstoff, Chlor, eine Methyl-, Methoxi-, Methylmercapto- oder Phenoxi-Gruppe steht, wobei letztere durch Halogen, Methyl- und/oder Methoxi-Gruppen substituiert sein kann.

Die erfindungsgemäßen Verbindungen werden hergestellt, indem man Tetrachlorphthalsäureanhydrid mit einem Amin der allgemeinen Formel

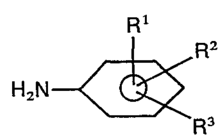

in welcher $R^1$, $R^2$ und $R^3$ die oben angegebenen Bedeutungen besitzen, in Gegenwart eines Verdünnungsmittels umsetzt.

Die erfindungsgemäßen Verbindungen werden im Pflanzenschutz als Bakterizide verwendet.


EP 0 043 488 A1

0043488

BAYER AKTIENGESELLSCHAFT 5090 Leverkusen-Bayerwerk
Zentralbereich
Patente Marken und Lizenzen Slr/klu/c
Ia

# Tetrachlorphthalamidsäure-Derivate, Verfahren zu ihrer Herstellung und ihre bakterizide Verwendung

Die vorliegende Erfindung betrifft neue Tetrachlorphthalamidsäure-Derivate, ein Verfahren zu ihrer Herstellung, sowie ihre Verwendung als Bakterizide im Pflanzenschutz.

Es ist bereits bekannt beworden, daß Tetrachlorphthalamidsäuren eine pflanzenbakterizide Wirksamkeit besitzen. So zeigt die N-(2,3-Dichlorphenyl)-tetrachlorphthalamidsäure eine bakterizide Wirkung gegen Xanthomonas oryzae im Reisanbau (vgl. z.B. GB-PS 1 355 849). Die Wirksamkeit ist jedoch bei niedrigen Anwendungskonzentrationen nicht immer befriedigend.

Es wurden neue Tetrachlorphthalamidsäure-Derivate der allgemeinen Formel

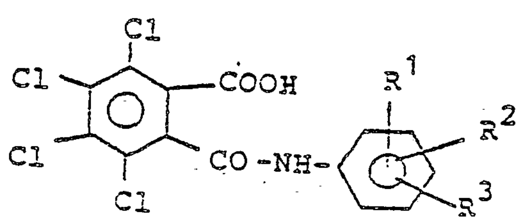

(I)

in welcher

$R^1$ für Dihalogenmethyl-, Dihalogenmethoxi- oder Dihalogenmethylmercapto-Gruppen steht,

$R^2$ für Wasserstoff, Halogen, Niederalkyl- oder Niederalkoxi-Gruppen steht,

$R^3$ für Wasserstoff, Halogen, Niederalkyl-, Niederalkoxi-, Niederalkylmercapto- oder Aroxi-Gruppen steht, wobei letztere gegebenenfalls substituiert sein können,

gefunden.

Weiterhin wurde gefunden, daß man die neuen Tetrachlorphthalamidsäure-Derivate der Formel I erhält, wenn man Tetrachlorphthalsäureanhydrid der Formel

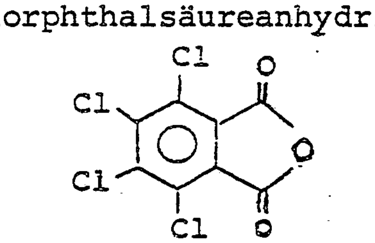

(II)

mit einem Amin der allgemeinen Formel

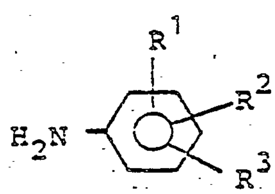

(III)

in welcher

$R^1$, $R^2$ und $R^3$ die oben angegebene Bedeutung besitzen,

in Gegenwart eines Verdünnungsmittels umsetzt.

Die neuen Tetrachlorphthalamidsäure-Derivate weisen starke bakterizide Wirkungen auf. Dabei ist es überraschend, daß die erfindungsgemäßen Verbindungen eine bessere Wirkung gegen pflanzenschädigende Bakterien aufweisen als die aus dem Stande der Technik bekannten Produkte. Die neuen Verbindungen stellen somit eine Bereicherung der Technik dar.

Von den Tetrachlorphthalamidsäure-Derivaten der Formel I sind diejenigen bevorzugt, in denen $R^1$ für eine Difluormethyl-, Difluormethoxi- oder Difluormethylmercapto-Gruppe steht, $\underline{R}^2$ für Wasserstoff, Chlor, Fluor, eine Methyl- oder Methoxi-Gruppe steht und $\underline{R}^3$ für Wasserstoff, Chlor, eine Methyl-, Methoxi-, Methylmercapto- oder Phenoxi-Gruppe steht, wobei letztere durch Halogen, Methyl- und/oder Methoxi-Gruppen substituiert sein kann.

Verwendet man zu Herstellung der erfindungsgemäßen Verbindungen beispielsweise Tetrachlorphthalsäureanhydrid und 4-Difluormethylanilin als Ausgangsstoffe, so kann der Reaktionsablauf durch das folgende Formelschema wiedergegeben werden:

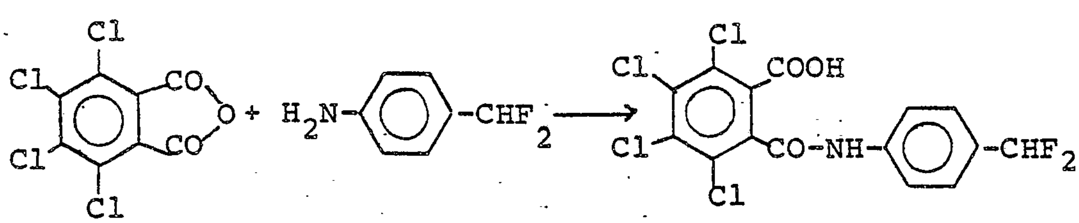

Das als Ausgangsstoff zu verwendende, allgemein bekannte Tetrachlorphthalsäureanhydrid ist durch die Formel II bezeichnet.

Die weiterhin als Ausgangsstoffe zu verwendenden Amine sind durch die allgemeine Formel III definiert. In dieser Formel haben $R^1$, $R^2$ und $R^3$ die für die allgemeine Formel I oben angegebenen vorzugsweisen Bedeutungen.

Die Amine der Formel III und deren Herstellung sind bekannt oder - soweit sie noch nicht bekannt sind - nach literaturbekannten Verfahren herstellbar (vgl. z.B. Z. Org. Chem. 29 (1964), 1; Tetrahedron Letters 1965, 403; Angew. Chem 89 (1977), 797; US-PS 3772 372 (Le A 11 480-US). So erhält man sie z.B., wenn man die entsprechenden Nitrobenzalfluoride mit Wasserstoff in Gegenwart eines Nickel-Katalysators in einem inerten Lösungsmittel (z.B. Tetrahydrofuran) im Temperaturbereich zwischen +20 und 50°C reduziert. Die dazu benötigten Nitrobenzalfluoride lassen sich in bekannter Weise aus den entsprechenden Nitrobenzalchloriden und wasserfreier Flußsäure in einem Druckgefäß aus rostfreiem Stahl im Druckbereich zwischen 2 und 10 atm. und im Temperaturbereich zwischen +60 und 120°C herstellen. Als Beispiele für Verbindungen der Formel (III) seien genannt:

2-, 3- oder 4-Difluormethyl-anilin, 3-Chlor-4-difluormethyl-anilin, 2-Difluormethyl-4-methylmercapto-anilin, 2-, 3- oder 4-Difluormethoxi-anilin, 3-Chlor-4-difluormethoxianilin, 2,3,4-Difluormethylmercapto-anilin, 3-Chlor-4-Difluormethylmercapto-anilin.

Als Verdünnungsmittel kommen alle inerten Lösungsmittel in Frage. Hierzu gehören Ether wie Tetrahydrofuran und

1.) NaOH / $H_2O$
2.) HCl

$$IV \longrightarrow I$$

Selbstverständlich können anstelle der erfindungsgemäßen Tetrachlorphthalamidsäure-Derivate der Formel I auch deren Salze Verwendung finden, z.B. deren Alkali- oder Ammonium-Salze. Die Salze lassen sich durch Hinzufügen der entsprechenden Base, z.B. in wäßriger oder alkoholischer Verdünnung, aus den Verbindungen der Formel I herstellen.

Die erfindungsgemäßen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Die erfindungsgemäßen Verbindungen sind besonders gut wirksam gegen bakterizide Pflanzenkrankheiten.

Bakterizide Mittel werden im Pflanzenschutz zur Bekämpfung von Pseudomonadaceae, Rhizobiaceae, Enterobacteriaceae, Corynebacteriaceae und Streptomycetaceae eingesetzt.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Insbesondere sind die erfindungsgemäßen Verbindungen wirksam gegen Bakterien der Gattung Xanthomonas, z.B.

Dioxan, Kohlenwasserstoffe wie Toluol, Chlorkohlenwasserstoffe wie Chloroform oder Ketone wie Aceton.

Die Reaktionstemperaturen können in einen größeren Bereich variiert werden, im allgemeinen arbeitet man zwischen 20 und 120°C, vorzugsweise bei 50 bis 100°C.

Bei der Durchführung des erfindungsgemäßen Verfahrens arbeitet man im allgemeinen in molaren Mengen, jedoch schadet ein Aminüberschuß bis etwa 10% nicht.

Die Aufarbeitung erfolgt in üblicher Weise. Die Reaktionsprodukte sind kristalline Verbindungen, die durch Filtration isoliert werden können.

Sollte bei Durchführung der Umsetzung als Nebenprodukt das Dicarbonsäureimid der Formel

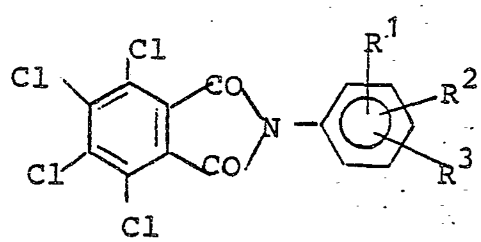

(IV)

in welcher
$R^1$ bis $R^3$ die weiter oben angegebene Bedeutung besitzen, entstehen, so lassen sich hieraus die erfindungsgemäßen Tetrachlorphthalamidsäure-Derivate in einfacher Weise herstellen, wenn man mit Natronlauge zunächst die wasserlöslichen Natriumsalze darstellt, die dann bei Raumtemperatur durch Ansäuern mit Salzsäure die erfindungsgemäßen Verbindungen der Formel I liefern:

gegen Xanthomonas oryzae an Reis. Bei der Bekämpfung von bakteriellen Krankheiten ist von Vorteil, daß die erfindungsgemäßen Verbindungen systemische Eigenschaften aufweisen.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Beispiel A

Xanthomonas oryzae-Test / Bakteriose / Reis /systemisch

Lösungsmittel: 125 Gewichtsteile Aceton
Emulgator: 3,75 Gewichtsteile Alkylanylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf systemische Eigenschaften werden 100 ml der Wirkstoffzubereitung auf Einheitserde gegossen, in der junge Pflanzen angezogen wurden. 3 Tage nach der Behandlung werden die Pflanzen mit einer wäßrigen Suspension von Xanthomonas oryzae durch Stichverletzung inokuliert. Danach verbleiben die Pflanzen 14 Tage bis zur Auswertung in einem Gewächshaus bei 24 bis 26 °C und 70 bis 80 % rel. Luftfeuchtigkeit.

Eine deutliche Überlegenheit in der Wirksamkeit gegenüber dem Stand der Technik zeigen bei diesem Test z.B. die Verbindungen gemäß folgender Herstellungsbeispiele: Nr. 1 und 3.

0043488

Herstellungsbeispiele

Beispiel 1

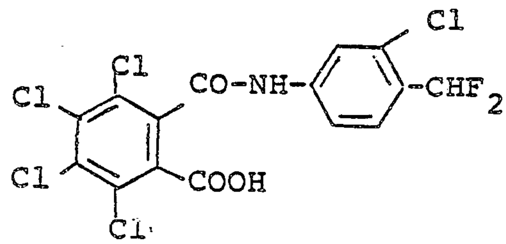

18,2 g (0,064 Mol) Tetrachlorphthalsäureanhydrid (Fp.255-257°C) werden bei 80 °C in 100 ml Dioxan gelöst und bei dieser Temperatur mit einer Lösung von 11,3 g (0,064 Mol) 3-Chlor-4-difluormethylanilin in 50 ml Dioxan versetzt. Man hält die Mischung während 1 Stunde im Sieden, kühlt dann ab und saugt das Reaktionsprodukt ab. Man erhält 9,7 g (das sind 33 % der Theorie) N-(3-Chlor-4-difluormethyl-phenyl)-tetrachlorphthalamidsäure vom Fp. 267-268°C.

In entsprechender Weise lassen sich die folgenden Verbindungen der allgemeinen Formel

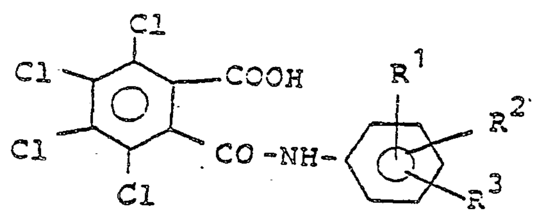

(I)

herstellen:

| Beispiel Nr. | $R^1$ | $R^2$ | $R^3$ | Fp(°C) |
|---|---|---|---|---|
| 2 | 3-$CHF_2$ | 4-Cl | H | 265-270 |
| 3 | 4-$OCHF_2$ | H | H | 235-236 |

Patentansprüche

1) Tetrachlorphthalamidsäure-Derivate der allgemeinen Formel

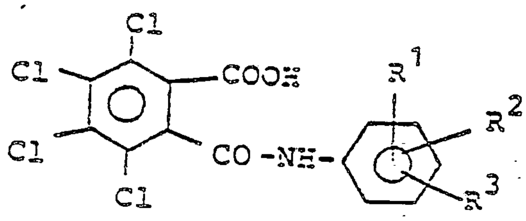

(I)

in welcher

$R^1$ für Dihalogenmethyl-, Dihalogenmethoxi- oder Dihalogenmethylmercapto-Gruppen steht,

$R^2$ für Wasserstoff, Halogen, Niederalkyl- oder Niederalkoxi-Gruppen steht, und

$R^3$ für Wasserstoff, Halogen, Niederalkyl-, Niederalkoxi-, Niederalkylmercapto- oder Aroxi-Gruppen steht, wobei letztere gegebenenfalls substituiert sein können.

2) Tetrachlorphthalamidsäure-Derivate gemäß Formel I in Anspruch 1,

wobei

$R^1$ für die Difluormethyl-, Difluormethoxi- oder Difluormethylmercapto-Gruppe steht,

$R^2$ für Wasserstoff, Chlor, Fluor, eine Methyl- oder eine Methoxi-Gruppe steht, und

$R^3$ für Wasserstoff, Chlor, eine Methyl-, Methoxi-, Methylmercapto- oder Phenoxi-Gruppe steht, wobei letztere durch Halogen, Methyl- und/oder Methoxi-Gruppen substituiert sein kann.

3) Verfahren zur Herstellung von Tetrachlorphthalamidsäure-Derivaten der Formel I in Anspruch 1, dadurch gekennzeichnet, daß man Tetrachlorphthalsäureanhydrid der Formel

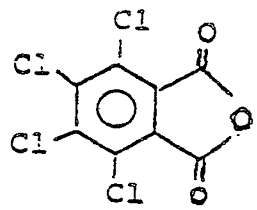

(II)

mit einem Amin der allgemeinen Formel

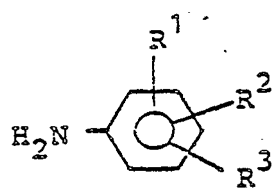

(III)

in welcher
$R^1$, $R^2$ und $R^3$ die oben angegebene Bedeutung besitzen,

in Gegenwart eines Verdünnungsmittels umsetzt.

4) Bakterizide Mittel, gekennzeichnet durch einen Gehalt an mindestens einem Tetrachlorphthalamidsäure-Derivat.

5) Verfahren zur Bekämpfung von Bakterien, dadurch gekennzeichnet, dam man Tetrachlorphthalamidsäure-Derivate der Formel I auf Bakterien oder ihren Lebensraum einwirken läßt.

6) Verwendung von Tetrachlorphthalamidsäure-Derivaten der Formel I zur Bekämpfung von Bakterien.

7) Verfahren zur Herstellung von bakteriziden Mitteln, dadurch gekennzeichnet, daß man Tetrachlorphthalamidsäuremitteln und/oder oberflächenaktiven Mitteln vermischt.

0043488

Europäisches Patentamt

# EUROPÄISCHER RECHERCHENBERICHT

Nummer der Anmeldung

EP 81 10 4785

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 975 435 (E.J. NIKAWITZ) * Spalte 1 * | 1,4-7 |
| | -- | |
| A | US - A - 3 996 043 (F.M. PALLOS) * Spalten 1,2 * | 1 |
| | -- | |
| D | GB - A - 1 355 849 (SANKYO) * Ansprüche; Seite 3 * | 1,3-7 |
| | -- | |
| P | EP - A - 0 024 016 (BAYER) * Ansprüche * | 1,3-7 |
| | ---- | |

KLASSIFIKATION DER ANMELDUNG (Int. Cl.³)

C 07 C 103/76
103/78
A 01 N 37/30

RECHERCHIERTE SACHGEBIETE (Int. Cl.³)

C 07 C 103/76
103/78

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 08-10-1981 | MOREAU |